# EUROPEAN PATENT APPLICATION

(11) **EP 2 117 162 A1**
(43) Date of publication of application: **11.11.2009**
(21) Application number: 08715145.2
(22) Date of filing: 04.03.2008
(51) Int. Cl.: H04L 12/14, H04L 12/56, H04M 17/00, H04Q 7/38

(54) **CHARGING METHOD, ROUTING METHOD AND RELATIVE DEVICE BASED ON NUMBER PORTABILITY**

(30) Priority: 12.04.2007 CN 200710095887
(71) Applicant: Huawei Technologies Co., Ltd., Longgang District, Shenzhen Guangdong 518129 (CN)
(72) Inventor: ZHANG, Li, Shenzhen Guangdong 518129 (CN)
(74) Representative: Thun, Clemens
(86) International application number: PCT/CN2008/070409
(87) International publication number: WO 2008/125034

(57) **Abstract**

The invention discloses a method for charging for a call service comprising: intercepting a request message for triggering a pre-paid service transmitted from a switch device visited by a pre-paid calling subscriber to a Service Control Point (SCP), wherein the request message carries information on a called subscriber; querying a Number Portability Database (NPDB) according to the information on the called subscriber, and carrying RN information obtained by query on the called subscriber in the request message and forwarding the request message to the SCP if the called subscriber is an off-net subscriber; charging, by the SCP, the calling subscriber by taking the called subscriber as an off-net subscriber if the RN information on the called subscriber is carried in the request message, and charging the calling subscriber by taking the called subscriber as an on-net subscriber if the RN information on the called subscriber is not carried in the request message.

## Description

### FIELD OF THE INVENTION

The present invention relates to the technology of number portability, and more particularly, to a method and a device for the charging for call services, and a method and a device for the charging for Value Added Services (VAS) based on number portability.

### BACKGROUND

Mobile Number Portability (MNP) service is the ability for a mobile subscriber to change subscription networks within the same country while retaining his/her original Mobile Station ISDN Number (MSISDN). That is, the subscriber has a permanent mobile number (referred to as a portable number), which may still be used when the subscriber transfers to another subscription network. Therefore the MNP service provides the mobile subscribers with much convenience. Based on the MNP service, when the subscriber uses the original mobile number to subscribe in a new subscription network, the new subscription network will allocate a new International Mobile Subscriber Identification (IMSI) Number to the ported in mobile subscriber. Various communication services are provided by the new subscription network instead to the ported in mobile subscriber, and the mobile subscriber may also enjoy the same supplementary and Value Added Services as enjoyed by other subscribers of the new subscription network, without any influence from the original subscription network.

However, the deployment of the MNP service inevitably results in the following two technical problems:

1. Routing problem: during the communication procedure of the MNP subscriber, how to know whether the subscriber has performed MNP and to route the communication signaling and messages to the actual network that the subscriber currently subscribes in.

2. Charging problem: during the communication procedure of the MNP subscriber, how does the service side know whether the subscriber has performed MNP so as to correctly distinguish the charging for ported in or ported-out subscribers?

Currently, the 3GPP 22.066/23.066 protocols provide normative suggestions on implementing the MNP service in GSM and UMTS networks. These specifications clearly define and describe the basic principle for implementing the MNP service and mainly describe two MNP implementation methods.

With the first method, a device such as an MNP Signaling Relay Function (MNP-SRF) is introduced to the networks and arranged between the MSC/GMSC and the Home Location Register (HLR). When the MSC/GMSC transmits a Send Routing Info (SRI) request to the HLR, the MNP-SRP intercepts the SRI message and query a Number Portability Database (NPDB) according to the number information carried in the SRI message. Once it is found that the number has been ported out, RN + MSISDN is returned to the MSC, where RN is Routing Number. The MSC connects the call to the GMSC according to the RN information, and the GMSC forwards the call to the new subscription network of the mobile subscriber, according to the RN information.

The implementation principle of the second method is similar to that of the first one, with the exception that the call directed to a ported out number is required to be triggered to an Intelligent Network (IN), the IN queries the NPDB and then adds the RN before the MSISDN of the mobile subscriber and makes a relay.

However, the two MNP implementation solutions described above provide description and specification only for the correct routing of the call service. Neither specific routing processing method nor charging method is provided for other non-call VASs, such as mobile data service, location-related service. Moreover, there is no related description on correct charging for the call service, either.

### SUMMARY

An embodiment of the invention provides a method and a device of charging for a call service, with the aim of solving the problem of correctly charging for the call service in a network environment deploying the MNP service.

An embodiment of the invention provides a method and a device of charging for a VAS based on MNP service, with the aim of solving the problem of correctly charging for various VASs in a network environment deploying the MNP service.

One embodiment of the invention provides a method for charging for a call service, which includes: determining, by a switch device visited by a post-paid calling subscriber, whether Routing Number (RN) information on a called subscriber may be obtained according to a received SRI_ACK message; and when a result of the determination is positive, writing the RN information into a Call Detail Record (CDR); charging the calling subscriber by taking the called subscriber as an off-net subscriber, when a charging device identifies that the RN is written into the CDR; and charging the calling subscriber by taking the called subscriber as an on-net subscriber, when a charging device identifies that the RN is not written into the CDR.

An embodiment of the invention further provides a switch device, which includes: means adapted to determine whether Routing Number (RN) information on a called subscriber may be obtained according to a received SRI_ACK message, when a post-paid subscriber makes a call to the called subscriber, and means adapted to write the RN information to a CDR when it is determined that the RN information may be obtained from the received SRI_ACK message.

An embodiment of the invention further provides a charging device, which includes: means adapted to identify whether RN information is written into a CDR; and means adapted to charge a calling subscriber by taking a called subscriber as an off-net subscriber, when the RN is written into the CDR; and to charge the calling subscriber by taking the called subscriber as an on-net subscriber, when the RN is not written into the CDR.

An embodiment of the invention further provides a method for charging for a call service, which include the following steps: intercepting a request message for triggering a pre-paid service transmitted from a switch device visited by a pre-paid calling subscriber to a Service Control Point (SCP), where the request message carries information on a called subscriber; querying a Number Portability Database (NPDB) according to the information on the called subscriber, and carrying RN information obtained by query on the called subscriber in the request message and forwarding the request message to the SCP, when it is found that the called subscriber is an off-net subscriber; determining, by the SCP, whether the RN information on the called subscriber may be obtained, according to the received request message; when the determination result is positive, charging the calling subscriber by taking the called subscriber as an off-net subscriber; and when the determination result is negative, charging the calling subscriber by taking the called subscriber as an on-net subscriber.

An embodiment of the invention further provides a Mobile Number Portability (MNP) signal relay device, which includes: means adapted to intercept a request message for triggering a pre-paid service transmitted from a switch device visited by a pre-paid calling subscriber to a Service Control Point (SCP), where the request message carries information on a called subscriber; means adapted to query an NPDB according to the information on the called subscriber; and means adapted to carry RN information obtained by query on the called subscriber in the request message and forwarding the request message to the SCP, when it is found that the called subscriber is an off-net subscriber.

An embodiment of the invention further provides a Service Control Point (SCP), which includes: means adapted to identify whether RN information on a called subscriber may be obtained from a request message transmitted from a switch device visited by a pre-paid calling subscriber; and means adapted to charge the calling subscriber by taking the called subscriber as an off-net subscriber, when the RN information on the called subscriber is obtained from the request message, and to charge the calling subscriber by taking the called subscriber as an on-net subscriber, when the RN information on the called subscriber is not obtained from the request message.

An embodiment of the invention further provides a method for charging for a Value Added Service (VAS) based on MNP, which includes the following steps: intercepting a query request message for querying routing information on a receiving subscriber transmitted from a VAS device to a Home Location Register (HLR); querying an NPDB according to information on the receiving subscriber carried in the query request message; and routing the query request message to an HLR of a corresponding network according to a query result; feeding, by the HLR of the corresponding network, a response message carrying the routing information on the receiving subscriber back to the VAS device; analyzing, by the VAS device, whether RN information on the receiving subscriber may be obtained, according to the routing information on the receiving subscriber carried in the received response message; and when the transmitting subscriber is a pre-paid subscriber, if the RN information on the receiving subscriber is obtained by analysis, reporting the obtained RN information to an SCP by carrying it in a charging request message; charging, by the SCP, the transmitting subscriber by taking the receiving subscriber as an off-net subscriber, when the RN of the receiving subscriber is carried in the charging request message; and charging for the transmitting subscriber by taking the receiving subscriber as an on-net subscriber, when the RN of the receiving subscriber is not carried in the charging request message.

An embodiment of the invention further provides an MNP signal relay device, which includes: means adapted to intercepting a query request message for querying routing information on a receiving subscriber transmitted from a VAS device to an HLR; means adapted to query an NPDB according to information on the receiving subscriber carried in the query request message; and means adapted to route the query request message to an HLR of a corresponding network according to a query result.

An embodiment of the invention further provides a Value Added Service device, which includes: means adapted to analyze whether RN information on a receiving subscriber may be obtained, according to routing information on the receiving subscriber carried in an SRI_ACK message transmitted from an HLR of a corresponding network; and means adapted to report the obtained RN information to an SCP by carrying it in a charging request message, when a transmitting subscriber is a pre-paid subscriber and if the RN information on the receiving subscriber is obtained by analysis.

An embodiment of the invention further provides a Service Control Point (SCP), which includes: means adapted to identify whether RN information on a receiving subscriber is carried in a charging request message transmitted from a VAS device; and means adapted to charge a transmitting subscriber by taking the receiving subscriber as an off-net subscriber, when the RN of the receiving subscriber is carried in the charging request message; and to charge the transmitting subscriber by taking the receiving subscriber as an on-net subscriber, when the RN of the receiving subscriber is not carried in the charging request message.

An embodiment of the invention further provides a method for charging for a VAS based on number portability, which includes: intercepting a query request message for querying routing information on a receiving subscriber transmitted from a VAS device to an HLR; querying an NPDB according to information on the receiving subscriber carried in the query request message; and routing the query request message to an HLR of a corresponding network according to a query result; feeding, by the HLR of the corresponding network, a response message carrying the routing information on the receiving subscriber back to the VAS device; analyzing, by the VAS device, whether RN information on the receiving subscriber may be obtained, according to the routing information on the receiving subscriber carried in the received response message; and when the transmitting subscriber is a post-paid subscriber, if the RN information on the receiving subscriber is obtained by analysis, writing the obtained RN information to a CDR; charging, by a charging device, the receiving subscriber by taking the transmitting subscriber as an off-net subscriber, when it is identified that the RN is written into the CDR; and charging for the receiving subscriber by taking the transmitting subscriber as an on-net subscriber, when it is identified that the RN is not written into the CDR.

An embodiment of the invention further provides a VAS device, which includes: means adapted to analyze whether RN information on a receiving subscriber may be obtained, according to routing information on the receiving subscriber carried in an SRI_ACK message transmitted from an HLR of a corresponding network; and means adapted to write the obtained RN information to a CDR, when a transmitting subscriber is a post-paid subscriber and if the RN information on the receiving subscriber is obtained by analysis.

An embodiment of the invention further provides a method for routing a VAS based a number portability, which includes:
intercepting a query request message for querying routing information on a receiving subscriber transmitted from a VAS device to an HLR;
querying an NPDB according to information on the receiving subscriber carried in the query request message; and
routing the query request message to an HLR of a corresponding network according to a query result.

With a few capability enhancement based on the MNP standard protocol, the embodiments of the invention implement the technical solution for charging for the call service and the technical solution for routing and charging for the non-call VAS under the MNP service environment, which provides an advantageous guarantee for better deploying the MNP service in a communication system.

### BRIEF DESCRIPTION OF THE DRAWINGS

Fig. 1 is a diagram illustrating the first embodiment of the process of charging a post-paid subscriber in an MNP network environment;

Fig. 2 is a diagram illustrating the second embodiment of the process of charging a post-paid subscriber in an MNP network environment;

Fig. 3 is a block diagram illustrating an architecture for charging a pre-paid subscriber in an MNP network environment according to the invention;

Fig. 4 is a diagram illustrating the first embodiment of the process of charging for and routing an SMS; and

Fig. 5 is a diagram illustrating the second embodiment of the process of charging for and routing an SMS.

### DETAILED DESCRIPTION

The embodiments of the invention propose first a technical solution of discriminatively charging a calling subscriber when the called subscriber is an on-net subscriber or an off-net subscriber in an MNP network environment.

The charging for the call service may be divided into charging post-paid subscribers and charging pre-paid subscribers. In the network environment with MNP service deployed, the principle of charging a post-paid call subscriber is as follows: a switch device (e.g. an MSC) visited by a post-paid subscriber determines whether Routing Number (RN) information on a called subscriber may be obtained, based on a received SRI_ACK message. Specifically, it is determined whether the received SRI Acknowledge (SRI_ACK) carries the RN information on the called subscriber. If the determination result is that the SRI_ACK message carries the RN information on the called subscriber, that is, if the RN information on the called subscriber may be obtained from the SRI_ACK message, the RN information carried in the SRI_ACK message is written into a Call Detail Record (CDR). If a charging device, such as the BOSS system, identifies that the RN is written into the CDR, the charging device charges the calling subscriber by taking the called subscriber as an off-net subscriber. If it is identified that the RN is not written into the CDR, the calling subscriber is charged by taking the called subscriber as an on-net subscriber.

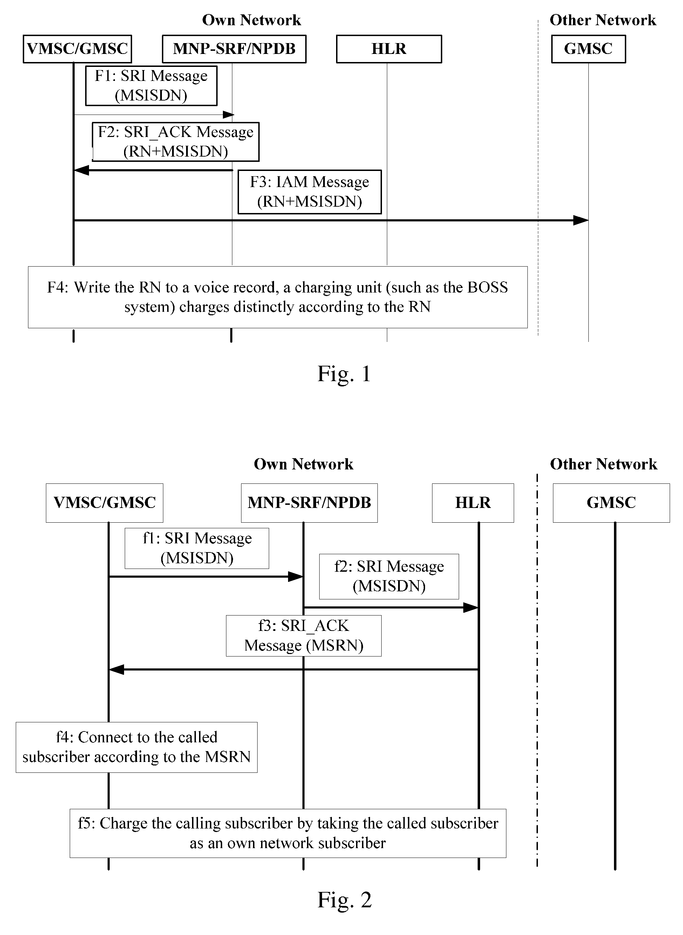

Fig. 1 is a diagram illustrating the flow of the first embodiment of charging a post-paid subscriber based on the MNP network environment.

At step F1, a calling subscriber initiates a call to a called subscriber. The VMSC/GMSC visited by the calling subscriber transmits an SRI message carrying MSISDN of the called subscriber to a corresponding HLR, according to information on the called subscriber, for the purpose of querying routing information on the called subscriber.

At step F2, an MNP-SRF arranged between the VMSC/GMSC and the HLR intercepts the SRI message transmitted from the VMSC/GMSC and performs an NPDB query operation according to the information on the called subscriber carried in the SRI message. If it is found through the query that the called subscriber has ported out, or the called subscriber is in fact an off-net subscriber, the RN of the called subscriber is added before the MSISDN of the called subscriber. The processed number information on the called subscriber is then carried in an SRI_ACK message and returned back to the VMSC/GMSC visited by the calling subscriber.

At step F3, the VMSC/GMSC visited by the calling subscriber transmits an IAM message and routes the call to a GMSC of the off-net, according to the RN carried in the SRI_ACK message. The GMSC of the off-net then connects the called subscriber.

At step F4, the VMSC/GMSC visited by the calling subscriber in turn writes the RN information carried in the SRI_ACK message to a CDR. A charging unit, such as the BOSS system, identifies that the RN information on the called subscriber has been written into the CDR and charges the calling subscriber by taking the called subscriber as network subscriber.

Fig. 2 is a diagram illustrating a second embodiment of the process of charging a post-paid subscriber in an MNP network environment.

At step f1, a calling subscriber initiates a call to a called subscriber. The VMSC/GMSC visited by the calling subscriber transmits an SRI message carrying MSISDN of the called subscriber to a corresponding HLR, according to information on the called subscriber, for the purpose of querying routing information on the called subscriber.

At step f2, an MNP-SRF arranged between the VMSC/GMSC and the HLR intercepts the SRI message transmitted from the VMSC/GMSC and performs an NPDB query operation according to the information on the called subscriber carried in the SRI message. If it is found through the query that the called subscriber has ported in, or the called subscriber itself is an on-net subscriber, the received SRI message will be directly routed to an HLR of the on-net.

At step f3, the HLR of the on-net finds a Mobile Subscriber Roaming Number (MSRN) of the called subscriber according to the information on the called subscriber carried in the SRI message, and then returns the found MSRN information on the called subscriber to the VMSC/GMSC visited by the calling subscriber, by carrying the MSRN information in an SRI_ACK message.

At step f4, the VMSC/GMSC visited by the calling subscriber connects the call to the called subscriber, according to the MSRN information carried in the SRI_ACK message.

At step f5, since the RN information on the called subscriber is not carried in the SRI_ACK message, the VMSC/GMSC visited by the calling subscriber will not write the RN into the CDR. A charging unit, such as the BOSS system, identifies that the RN information on the called subscriber is not written into the CDR and charges the calling subscriber by taking the called subscriber as an on-net subscriber.

According to the solution for charging the post-paid subscribers based on the MNP network environment described above, the existing switch device, such as the MSC, and charging device, such as the BOSS system, have to be improved. It is required that the switch device should have the following units: a unit for determining whether the RN information on the called subscriber is carried in the received SRI_ACK message, when the post-paid calling subscriber makes a call to the called subscriber; and a unit for writing the RN information into the corresponding CDR, when it is determined that the RN information is carried in the received SRI_ACK message. All the switch devices having these processing functions are within the protection scope of the invention. Components with these processing functions may be realized with corresponding software. For example, the processing functions are programmed into software programs, which are then installed and run in the existing switch devices, thus the switch devices that the embodiment of the invention intends to protect may be realized. Practically, the processing functions may also be realized with corresponding hardware.

Furthermore, in order to implement the solution for charging the post-paid subscribers under the MNP network environment as described above, it is required that the charging device has the following units: a unit for determining whether the RN information on the called subscriber is written into the CDR; and a unit for charging the calling subscriber by taking the called subscriber as an off-net user, if the RN information on the called subscriber is written into the CDR, and for charging the calling subscriber by taking the called subscriber as an on-net user, if the RN information on the called subscriber is not written into the CDR. Similarly, the processing units here may be realized with software programs or hardware.

In the network environment deploying the MNP services, the principle for implementing the embodiment of the invention for charging a pre-paid subscriber is as follows: intercepting a request message, usually an Initial Detect Point (IDP) message, for triggering a pre-paid service transmitted from a switch device, such as the MSC, visited by a pre-paid calling subscriber to an SCP, where the transmitted request message carries information on a called subscriber; querying an NPDB according to the information on the called subscriber carried in the request message, and carrying RN information obtained by query on the called subscriber in the request message and forwarding the request message to the SCP, if it is found that the called subscriber is an off-net subscriber; determining, by the SCP, whether the RN information on the called subscriber may be obtained, based on the received request message; if the determination result is positive, that is, the RN information on the called subscriber is carried in the request message, charging the calling subscriber by taking the called subscriber as an off-net subscriber; and if the RN information on the called subscriber is not carried in the request message, charging the calling subscriber by taking the called subscriber as an on-net subscriber.

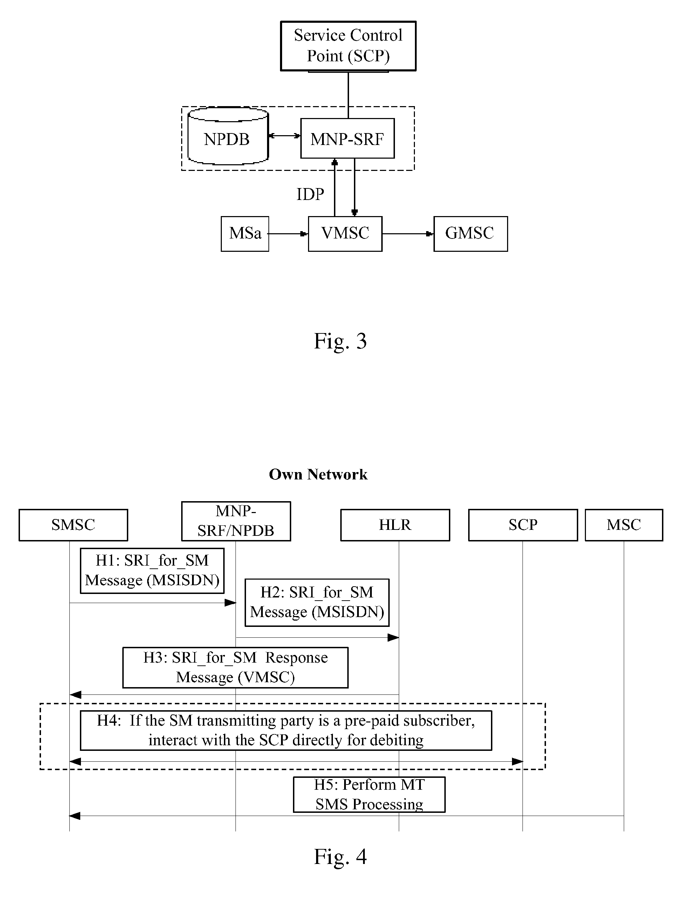

Fig. 3 is a block diagram illustrating network architecture for charging a pre-paid subscriber in the MNP network environment of the invention. Usually, the MNP-SRF intercepts the SRI message by identifying an operation code of the Transaction Capability Application Part (TCAP). But from the viewpoint of network layers, the Intelligent Network Application Protocol (INAP) is also a user layer of the TCAP. Therefore, the same processing may be used to enhance the message interception capability of the MNP-SRF. For example, from the viewpoint of network layer architecture, the TCAP is a layer below the INAP, and the IDP message is one in the INAP layer; the prior art performs the interception by identifying the SRI message by the operation code, thus the IDP message may be intercepted and identified by enhancing the message interception function of the MNP-SRF device). That is to say, the interception of the IDP message by the MNP-SRF is introduced. MNP analysis and processing is then performed at the MNP-SRF, and the necessary MNP information is added to the IDP message. Such improvement has little influence on the IN service, and the routing of and charging for the pre-paid call service may be done by only analyzing the numbers.

An MNP-SRF device is introduced between the existing switch device and the SCP and used to intercept the IDP message for triggering the pre-paid service transmitted from the switch device to the SCP. The MNP-SRF device queries the NPDB according to the information on the called subscriber carried in the IDP message. If it is determined by query that the called subscriber has ported out or is itself an off-net subscriber, the RN information on the called subscriber is added to the intercepted IDP message. The IDP message with the RN information on the called subscriber added is then submitted to the SCP, which charges the calling subscriber discriminatively according to whether the RN information on the called subscriber is carried in the IDP message. The processing procedure for charging for the pre-paid call service based on the system architecture as shown in Fig. 3 is as follows.

The pre-paid calling subscriber initiates an intelligent call, and the SSP/VMSC visited by the calling subscriber submits the IDP message to the SCP so as to trigger the SCP to pre-debit the subscriber. The submitted IDP message carries the information on the called subscriber, such as the number of the called subscriber.

The MNP-SRF device intercepts the IDP message and queries the NPDB according to the information on the called subscriber carried in the IDP message. If it is found that the number of the called subscriber is that of a ported out called subscriber, the RN information obtained by query on the called subscriber is added as a prefix before the number of the called subscriber in the IDP message.

The MNP-SRF device forwards the processed IDP message to the SCP to trigger the pre-debit service. At this point it is no longer necessary for the SCP to query the NPDB, and it may determine whether the called subscriber is an on-net subscriber or an off-net subscriber, according only to the RN prefix carried in the IDP message (number analysis is enough), which is used to charge the calling subscriber discriminatively.

When the SCP finishes pre-debiting, if it is determined that the subscriber may continue the call, it is necessary to deliver a CONNECT message (which carries the RN prefix number) to the VMSC visited by the calling subscriber. The VMSC in turn connects the call to the called subscriber according to the RN prefix number carried in the CONNECT message.

According to the implementation solution for charging the pre-paid subscribers in the MNP network environment described above, the existing MNP-SRF device has to be upgraded and improved. The MNP-SRF is required to have the following units: a unit for intercepting the request message for triggering the pre-paid service transmitted from the switch device, such as the MSC, visited by the pre-paid calling subscriber to the SCP, where the request message is usually an IDP message and carries the information on the called subscriber, such as number information on the called subscriber; a unit for querying the NPDB according to the information on the called subscriber carried in the received request message, and a unit for carrying the RN information obtained by query on the called subscriber in the request message and forwarding the request message to the SCP, if it is known by query that the called subscriber is an off-net subscriber. The above improvement may be realized with software programs or hardware improvement.

To implement the solution for charging the pre-paid subscribers in the MNP network environment, the existing SCP also needs improvements. The SCP must have the following units: a unit for identifying whether the request message, such as the IDP message, transmitted from the switch device visited by the pre-paid calling subscriber carries the RN information on the called subscriber; and a unit for charging the calling subscriber by taking the called subscriber as an off-net subscriber, if it is identified that the request message carries the RN information on the called subscriber, and for charging the calling subscriber by taking the called subscriber as an on-net subscriber, if the request message does not carry the RN information on the called subscriber. Similarly, the improvements on the SCP may be realized with software programs or hardware improvement.

Aside from the solution for charging for the call service, the embodiments of the invention also provide solutions for charging for and routing non-call services, such as mobile VASs, including SMS services, MMS services and location service etc., in the network environment with the MNP service deployed. The principle of the method for charging for the VASs based on the MNP provided by the embodiment of the invention is as follows: intercepting a query request message, such as the SRI message, for querying routing information on a receiving subscriber transmitted from a VAS device to a Home Location Register (HLR); querying an NPDB according to information on the receiving subscriber, such as number information on the receiving subscriber, carried in the query request message; and, according to a query result, routing the query request message to the HLR of the on-net, if the receiving subscriber is an on-net subscriber or a subscriber ported in from off-nets, and routing the query request message to a corresponding HLR of an off-net, if the receiving subscriber is an off-net subscriber or an on-net subscriber which has ported out from the on-net; feeding, by the HLR of the corresponding network, a response message carrying the information on the receiving subscriber back to the VAS device. Accordingly, when the VAS device receives the response message fed back from the HLR, the method for charging for the VASs based on the MNP includes: the VAS device analyses whether RN information on the receiving subscriber may be obtained, according to the routing information on the receiving subscriber carried in the received response message. Since the routing information on the receiving subscriber usually includes the IMSI number of the receiving subscriber, the network coding rule may be obtained by query according to the IMSI number of the receiving subscriber. If the receiving subscriber is an off-net subscriber or has ported out, the RN information on the receiving subscriber may be found. If the transmitting subscriber is a pre-paid subscriber, when the VAS device obtains the RN information on the receiving subscriber by analysis, the obtained RN information is submitted to an SCP by carrying it in a charging request message. If the RN of the receiving subscriber is carried in the charging request message, the SCP charges the transmitting subscriber by taking the receiving subscriber as an off-net subscriber; and, if the RN information on the receiving subscriber is not carried in the charging request message, the SCP charges the transmitting subscriber by taking the receiving subscriber as an on-net subscriber. If the transmitting subscriber is a post-paid subscriber, when the VAS device obtains the RN information on the receiving subscriber by analysis, the obtained RN information is written into the CDR. If the corresponding charging device identifies that RN is written into the CDR, it charges the transmitting subscriber by taking the receiving subscriber as an off-net subscriber; and, if it is identified that the RN is not written into the CDR, the charging device charges the transmitting subscriber by taking the receiving subscriber as an on-net subscriber.

Furthermore, after pre-debiting the subscriber, the SCP will deliver a CONNECT message to the corresponding VAS device. Upon receiving the CONNECT message delivered by the SCP, the VAS device in turn performs message delivery according to the routing information on the receiving subscriber in the received response message. The VAS device may include but not limited to a Short Message Service Centre (SMSC), a Multi Message Service Contre (MMSC), or a Gateway Mobile Location Contre (GMLC), an International Message Service Gateway (IMSG).

Based on the principle of the technical solutions of the invention, in order to correctly charge for and route some VASs in the MNP network environment, an MNP-SRF needs to be introduced between the corresponding VAS device and the HLR. The message interception function of the MNP-SRF also has to be enhanced for the following: intercepting a location query request message transmitted from the VAS device to the HLR; querying the NPDB according to the information on the receiving subscriber carried in the location query request message to obtain the HLR of the network that the receiving subscriber currently subscribes, and then correctly routing the location query request message to the HLR of the network that the receiving subscriber currently subscribes, according to the query result. In this way, the embodiment of the invention provides an MNP-SRF device, which includes: means adapted to intercept a query request message for querying routing information on a receiving subscriber transmitted from a VAS device to an HLR; means adapted to query an NPDB according to information on the receiving subscriber carried in the received query request message; and means adapted to route the query request message to an HLR of a corresponding network according to a query result. These functional components may be realized with software programs or hardware.

Fig. 4 is a diagram illustrating a first embodiment of charging for and routing the SMS. The detailed implementation procedure includes the following steps.

In step H1, a transmitting party transmits an SM to the SMSC. Upon receiving the SM, the SMSC transmits an SRI_for_SM message carrying the MSISDN to the HLR to query routing information on the SM receiving party.

In step H2, the MNP-SRF device intercepts the SRI_for_SM message transmitted by the SMSC and queries the NPDB according to subscriber number information on the SM receiving party carried in the SRI_for_SM message. If it is found by query that the receiving party is a ported-in subscriber or the receiving party is itself an on-net subscriber, the SRI_for_SM message is routed to the HLR of the on-net.

In step H3, the HLR of the on-net queries the routing information on the receiving party according to the subscriber number information on the SM receiving party carried in the received SRI_for_SM message, and feeds the routing information obtained by query back to the SMSC by carrying it in the SRI_for_SM response message. The routing information on the receiving party includes information on the MSC that the receiving party currently visits, That is, the VMSC of the receiving party, and the IMSI of the receiving party.

In step H4, if the SM transmitting party is a Pre-Paid service (PPS) subscriber, and the SMSC is connected to the SCP directly, the SMSC transmits directly to the SCP a debiting request message; if the SMSC is connected to the SCP through a charging unit, the SMSC needs to submit the charging request message to the SCP through the charging unit. If the SCP identifies that the debit request message transmitted from the SMSC does not carry the RN information on the receiving subscriber, the SCP performs the pre-debiting on the SM transmitting subscriber by taking the SM receiving party as an on-net subscriber.

In step H5, upon finishing the pre-debiting processing, the SCP transmits a CONNECT message to the SMSC. Upon receiving the CONNECT message delivered from the SCP, the SMSC performs the Mobile Terminated SMS (MT SMS) processing which follows, according to the routing information on the receiving party carried in the received SRI_for_SM response message.

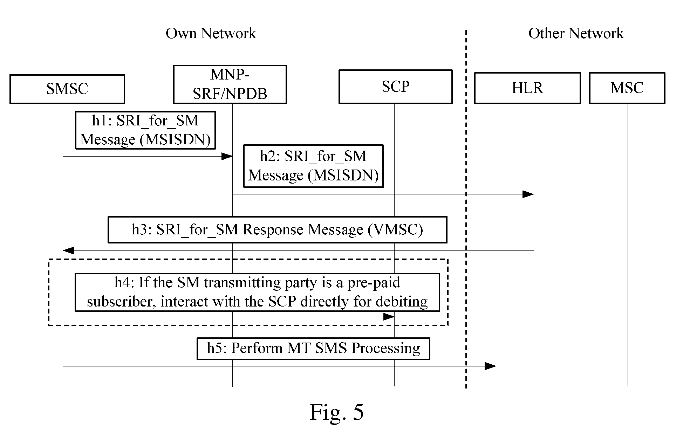

Fig. 5 is a diagram illustrating the second embodiment of charging for and routing an SMS. The detailed implementation procedure includes:

In step h1, a transmitting party transmits an SM to the SMSC. Upon receiving the SM, the SMSC transmits an SRI_for_SM message carrying the MSISDN to the HLR to query routing information on the SM receiving party.

In step h2, the MNP-SRF device intercepts the SRI_for_SM message transmitted by the SMSC and queries the NPDB according to subscriber number information on the SM receiving party carried in the SRI_for_SM message. If it is found by query that the receiving party is a ported-out subscriber or the receiving party is itself an off-net subscriber, the SRI_for_SM message is routed to the HLR of the respective off-net according to the query result.

In step h3, the HLR of the respective off-net queries the routing information on the receiving party according to the subscriber number information on the SM receiving party carried in the SRI_for_SM message, and feeds the routing information obtained by query to the SMSC by carrying it in the SRI_for_SM response message. The routing information on the receiving party includes information on the MSC that the receiving party currently visits that is the VMSC of the receiving party, and the IMSI of the receiving party. The SMSC may obtain the RN information on the receiving party by querying the network coding rule, according to the IMSI of the receiving party included in the received SRI_for_SM response message.

In step h4, if the SM transmitting party is a Pre-Paid service (PPS) subscriber, and the SMSC is connected to the SCP directly, the SMSC transmits directly to the SCP a debiting request message; if the SMSC is connected to the SCP through a charging unit, the SMSC submits the charging request message to the SCP through the charging unit. The charging request message submitted from the SMSC to the SCP has the RN of the receiving subscriber before the carried MSISDN of the receiving subscriber. If the SCP identifies that the debit request message transmitted from the SMSC carries the RN information on the receiving subscriber, the SCP performs the pre-debiting on the SM transmitting subscriber by taking the SM receiving party as an off-net subscriber.

In step h5, upon finishing the pre-debiting processing, the SCP transmits a CONNECT message to the SMSC. Upon receiving the CONNECT message delivered from the SCP, the SMSC performs the MT SMS processing that follows, according to the routing information on the receiving party carried in the SRI_for_SM response message.

Furthermore, when the SMSC generates the CDR for this case, RN information also has to be added before the MSISDN of the receiving subscriber such that the charging unit can charge discriminatively.

Practically, the charging for and routing of the MMS message may also be similar to the charging for and routing of the SMS as described above. To keep the existing MMS processing protocol the same, the SM processing procedure described above may be used. That is, the MMSC may query the routing information on the MM receiving party through the SMSC. For the routing query procedure of the MM receiving party please refer to the SMS processing procedure described above. A private interface may be used between the SMSC and the MMSC. According to the IMSI of the receiving party carried in the SRI_for_SM respone message returned by the SMSC, the MMSC queries a local static routing table to obtain the routing information on the MM receiving party. If the receiving party is an off-net subscriber or a ported out-subscriber, the RN information on the MM receiving party may be further obtained. If the MM transmitting party is a PPS subscriber and according to analysis the MMS receiving party is an off-net subscriber or a ported-out subscriber, it is necessary for the MMSC to add the corresponding RN before the MSISDN of the receiving party subscriber submitted to the charging unity by the MMSC. The debiting request transmitted from the charging unity to the SCP also has to carry the MSISDN and RN information on the receiving party that is transmitted by the MMSC. As a result, the SCP can charge the MM transmitting party discriminatively according to whether the RN information on the receiving party is carried in the charging request message. Moreover, when generating the CDR, the MMSC also needs to add the RN information before the MSISDN of the receiving party such that the charging unit can charge discriminatively.

Similarly, a simple procedure for charging for and routing the location service involves querying the routing information on the subscriber by the GMLC to the HLR using a standard SRI_for_LSC message. The MNP-SRF device arranged between the GMLC and the HLR is similar to intercepting the SRI_for_SM, the function for intercepting the SRI_for_LSC message transmitted by the GMLC needs to be enhanced. Then the NPDB is queried according to information on the queried subscriber carried in the intercepted SRI_for_LSC message, and the SRI_for_LCS message is routed to an HLR in corresponding network according to the query result. The HLR of the corresponding network feeds the routing information on the queried subscriber back to the GMLC through an SRI_for_LCS response message. The GMLC in turn analyzes and determines whether the RN information on the queried subscriber may be obtained. If the initiating party of the GMLC is a PPS subscriber and the RN information on the queried subscriber is obtained by analysis, it is necessary for the GMLC to add the RN information on the queried subscriber before the MSISDN of the queried subscriber carried in the charging request message that is submitted to the SCP, such that the SCP may charge the querying subscriber discriminatively, according to whether the RN information on the queried subscriber is carried in the charging request message. When the GMLC generates the CDR, it is also required that the RN information is added before the MSISDN of the queried subscriber such that the charging unit may charge discriminatively.

Under the MNP network environment, in order to implement the charging for and routing of the various non-call VASs, the VAS device needs to have the following unit: a unit for analyzing whether the RN information on the receiving subscriber may be obtained according to the routing information on the receiving subscriber carried in the SRI_ACK transmitted from the HLR of the corresponding network; a unit, when the RN information on the receiving subscriber is obtained by analysis, if the transmitting subscriber is a PPS subscriber, for carrying the RN information in the charging request message and submitting the request message to the SCP; or for writing the obtained RN information to the CDR, when the transmitting subscriber is a post-paid subscriber. The VAS device includes but is not limited to an SMSC, an MMSC, a GMLC or an IMSG.

Furthermore, in order to implement the charging for and routing of the various non-call VASs, the SCP needs to have the following units: a unit for identifying whether the RN information on the receiving subscriber is carried in the charging request message transmitted from the VAS device, and a unit for charging the transmitting subscriber by taking the receiving subscriber as an off-net user, when the RN information on the receiving subscriber is carried in the received charging request message, and for charging the transmitting subscriber by taking the receiving subscriber as an on-net user, when the RN information on the receiving subscriber is not carried in the received charging request message.

In summary, in the network environment with NMP service deployed, if the calling or called subscriber has ported out, the corresponding RN information is required to be added before the MSISDN of the called subscriber that is submitted to the charging unity by all the service parts. For the PPS, the RN information and MSISDN of the called subscriber transmitted by the service parts have to be transmitted in the debiting request message submitted from the charging unit to the SCP. Thus, the charging unit or SCP may discriminatively charge the calling party or transmitting party, according to the RN field submitted by the service party without querying the MNP database. The service parts may also write the RN information on the called or receiving subscriber in the CDR, which facilitates the query and account checking.

With a few capability enhancement based on the MNP standard protocol, the embodiments of the invention implement the technical solution for charging for the call service and the technical solution for charging for and routing the non-call VAS under the NMP service environment, which provides advantageous guarantee for better deploying the MNP service.

Obviously, those skilled in the art may devise various modifications and variations on the invention without departing from the spirit and scope of the invention. Thus, if the modifications and variations are in the scope of the claims of the invention and the equivalent technologies, the invention intends to include the modifications and variations.

## Claims

1. A method for charging for a call service, **characterized in** comprising:
determining, by a switch device visited by a post-paid calling subscriber, whether Routing Number (RN) information on a called subscriber is obtained, according to a received Send Routing Info Acknowledge (SRI_ACK) message; and
writing the obtained RN information into a Call Detail Record (CDR) if the RN information on the called subscriber is obtained; and
charging the calling subscriber by taking the called subscriber as an off-net subscriber if the charging device identifies that the RN is written into the CDR, and charging the calling subscriber by taking the called subscriber as an on-net subscriber if the charging device identifies that the RN is not written into the CDR.

2. A switch device, **characterized in** comprising:
means adapted to determine whether Routing Number (RN) information on a called subscriber may be obtained according to a received Send Routing Info Acknowledge (SRI_ACK) message, when a post-paid subscriber makes a call to the called subscriber; and
means adapted to write the RN information into a CDR when the RN information may be obtained from the received SRI_ACK message.

3. A charging device, **characterized in** comprising:
means adapted to identify whether Routing Number (RN) information is written into a CDR; and
means adapted to charge a calling subscriber by taking a called subscriber as an off-net subscriber if the RN is written into the CDR, and to charge the calling subscriber by taking the called subscriber as an on-net subscriber if the RN is not written into the CDR.

4. A method for charging for a call service, **characterized in** comprising:
intercepting a request message for triggering a pre-paid service transmitted from a switch device visited by a pre-paid calling subscriber to a Service Control Point (SCP), wherein the request message carries information on a called subscriber;
querying a Number Portability Database (NPDB) according to the information on the called subscriber, and if the called subscriber is an off-net subscriber, carrying Routing Number (RN) information obtained by query on the called subscriber in the request message and forwarding the request message to the SCP; and
determining, by the SCP, whether the RN information on the called subscriber is obtained according to the received request message, charging the calling subscriber by taking the called subscriber as an off-net subscriber if the RN information on the called subscriber is obtained and charging the calling subscriber by taking the called subscriber as an on-net subscriber if the RN information on the called subscriber is not obtained.

5. The method of claim 4, wherein the request message is an Initial Detection Point (IDP) message.

6. A Mobile Number Portability (MNP) signal relay device, **characterized in** comprising:
means adapted to intercept a request message for triggering a pre-paid service transmitted from a switch device visited by a pre-paid calling subscriber to a Service Control Point (SCP), wherein the request message carries information on a called subscriber;
means adapted to query a Number Portability Database (NPDB) according to the information on the called subscriber; and
means adapted to carry Routing Number (RN) information obtained by query on the called subscriber in the request message and forward the request message to the SCP if the called subscriber is an off-net subscriber.

7. The device of claim 6, **characterized in that** the request message is an Initial Detection Point (IDP) message.

8. A Service Control Point (SCP), **characterized in** comprising:
means adapted to identify whether Routing Number (RN) information on a called subscriber is obtained from a request message transmitted from a switch device visited by a pre-paid calling subscriber; and
means adapted to charge the calling subscriber by taking the called subscriber as an off-net subscriber if the RN information on the called subscriber is obtained from the request message, and charge the calling subscriber by taking the called subscriber as an on-net subscriber if the RN information on the called subscriber is not obtained from the request message.

9. The SCP of claim 8, wherein the request message is an Initial Detection Point (IDP) message.

10. A method for charging for a Value Added Service (VAS) based on number portability, **characterized in** comprising:
intercepting a query request message for querying routing information on a receiving subscriber transmitted from a Value Added Service (VAS) device to a Home Location Register (HLR);
querying a Number Portability Database (NPDB) according to information on the receiving subscriber carried in the query request message; and
routing the query request message to an HLR of a corresponding network according to the query result;
feeding, by the HLR of the corresponding network, a response message carrying the routing information on the receiving subscriber back to the VAS device;
analyzing, by the VAS device, whether Routing Number (RN) information on the receiving subscriber may be obtained according to the routing information on the receiving subscriber carried in the received response message;
reporting the obtained RN information to an Service Control Point (SCP), by carrying the RN information in a charging request message, if the RN information on the receiving subscriber is obtained by analysis in the case that a transmitting subscriber is a pre-paid subscriber; and
charging, by the SCP, the transmitting subscriber by taking the receiving subscriber as an off-net subscriber if the RN of the receiving subscriber is carried in the charging request message, and charging the transmitting subscriber by taking the receiving subscriber as an on-net subscriber if the RN of the receiving subscriber is not carried in the charging request message.

11. The method of claim 10, **characterized in** further comprising:
executing, by the VAS device, message delivery processing according to the routing information on the receiving subscriber carried in the received response message upon receiving by the VAS device a CONNECT instruction delivered from the SCP.

12. The method of claim 10 or 11, **characterized in that** the VAS device is:
a Short Message Service Center (SMSC); or
an Internet Message Service Gateway (IMSG); or
a Multimedia Message Service Center (MMSC); or
a Gateway Mobile Location Center (GMLC).

13. A Mobile Number Portability (MNP) signal relay device, **characterized in** comprising:
means adapted to intercept a query request message for querying routing information on a receiving subscriber transmitted from a Value Added Service (VAS) device to an Home Location Register (HLR);
means adapted to query a Number Portability Database (NPDB) according to information on the receiving subscriber carried in the query request message; and
means adapted to route the query request message to an HLR of a corresponding network according to the query result.

14. A Value Added Service (VAS) device, **characterized in** comprising:
means adapted to analyze whether Routing Number (RN) information on a receiving subscriber may be obtained according to routing information on the receiving subscriber carried in a Send Routing Info Acknowledge (SRI_ACK) message transmitted from an Home Location Register (HLR) of a corresponding network; and
means adapted to report the obtained RN information to a Service Control Point (SCP) by carrying it in a charging request message if a transmitting subscriber is a pre-paid subscriber in the case that the RN information on the receiving subscriber is obtained by analysis.

15. The VAS device of claim 14, **characterized in that** the VAS device is:
a Short Message Service Center (SMSC); or
an Internet Message Service Gateway (IMSG); or
a Multimedia Message Service Center (MMSC); or
a Gateway Mobile Location Center (GMLC).

16. A Service Control Point (SCP), **characterized in** comprising:
means adapted to identify whether Routing Number (RN) information on a receiving subscriber is carried in a charging request message transmitted from a Value Added Service (VAS) device; and
means adapted to charge a transmitting subscriber by taking the receiving subscriber as off-net subscriber if the RN of the receiving subscriber is carried in the charging request message, and charge the transmitting subscriber by taking the receiving subscriber as an on-net subscriber if the RN of the receiving subscriber is not carried in the charging request message.

17. A method for charging for a Value Added Service (VAS) based on number portability, **characterized in** comprising:
intercepting a query request message for querying routing information on a receiving subscriber transmitted from a VAS device to an Home Location Register (HLR);
querying a Number Portability Database (NPDB) according to information on the receiving subscriber carried in the query request message; and
routing the query request message to an HLR of a corresponding network according to the query result;
feeding, by the HLR of the corresponding network, a response message carrying the routing information on the receiving subscriber back to the VAS device;
analyzing, by the VAS device, whether Routing Number (RN) information on the receiving subscriber may be obtained according to the routing information on the receiving subscriber carried in the received response message; and
writing the obtained RN information into a CDR if the RN information on the receiving subscriber is obtained by analysis in the case that the transmitting subscriber is a post-paid subscriber;
charging, by a charging device, the receiving subscriber by taking the transmitting subscriber as an off-net subscriber if the RN is written into the CDR, and charging for the receiving subscriber by taking the transmitting subscriber as an on-net subscriber if the RN is not written into the CDR.

18. A Value Added Services (VAS) device, **characterized in** comprising:
means adapted to analyze whether Routing Number (RN) information on a receiving subscriber may be obtained according to routing information on the receiving subscriber carried in a Send Routing Info Acknowledge (SRI_ACK) message transmitted from a Home Location Register (HLR) of a corresponding network; and
means adapted to write the obtained RN information into a CDR if the RN information on the receiving subscriber is obtained by analysis in the case that a transmitting subscriber is a post-paid subscriber.

19. A method for routing a Value Added Service (VAS) based on a number portability, **characterized in** comprising:
intercepting a query request message for querying routing information on a receiving subscriber transmitted from a VAS device to an Home Location Register (HLR);
querying a Number Portability Database (NPDB) according to information on the receiving subscriber carried in the query request message; and
routing the query request message to an HLR of a corresponding network according to the query result.

20. The method of claim 19, **characterized in that** the routing the query request message to the HLR of the corresponding network according to the query result comprises:
routing the query request message to a corresponding HLR within an on-net if the query result is that the receiving subscriber is a ported-in subscriber; or
routing the query request message to a corresponding HLR within an off-net if the query result is that the receiving subscriber is a ported-out subscriber.
